Europäisches Patentamt

European Patent Office

Office européen des brevets

(19)

(11)  EP 1 174 387 A1

## (12)  DEMANDE DE BREVET EUROPEEN

(43) Date de publication:
    23.01.2002  Bulletin 2002/04

(51) Int Cl.⁷: C01B 3/38

(21) Numéro de dépôt: 01401874.1

(22) Date de dépôt: 12.07.2001

(84) Etats contractants désignés:
    AT BE CH CY DE DK ES FI FR GB GR IE IT LI LU
    MC NL PT SE TR
    Etats d'extension désignés:
    AL LT LV MK RO SI

(30) Priorité: 19.07.2000  FR 0009470

(71) Demandeur: L'AIR LIQUIDE, SOCIETE ANONYME
    POUR L'ETUDE ET L'EXPLOITATION DES
    PROCEDES GEORGES CLAUDE
    75321 Paris Cédex 07 (FR)

(72) Inventeurs:
    • Cantacuzene, Serban
      91300 Massy (FR)
    • Gary, Daniel
      78180 Montigny Le Bretonneux (FR)

(74) Mandataire: Mellul-Bendelac, Sylvie Lisette et al
    L'Air Liquide, Service Propriété Industrielle, 75,
    Quai d'Orsay
    75321 Paris Cedex 07 (FR)

(54) **Procédé de production d'une atmosphère CO/H2/N2 par oxydation d'un hydrocarbure gazeux, et installation pour sa mise en oeuvre**

(57)  Procédé de production d'une atmosphère CO/$H_2$/$N_2$ par oxydation d'un hydrocarbure gazeux par un milieu oxygéné dans un réacteur à lit catalytique. Ledit milieu oxygéné est un résiduel $O_2$/$N_2$ issu d'un liquide prélevé dans la cuve d'une colonne de fractionnement pour la production d'azote gazeux ou le résiduel comportant de l'azote et de l'oxygène, issu du résiduaire d'un appareil de séparation d'air par voie membranaire

Installation permettant la mise en oeuvre dudit procédé.

FIG.2

EP 1 174 387 A1

## EP 1 174 387 A1

**Description**

L'invention concerne le domaine de la production d'atmosphères riches en hydrogène et en CO, dont le complément est essentiellement constitué par de l'azote. De telles atmosphères peuvent être utilisées lors de traitements métallurgiques devant avoir lieu en atmosphère réductrice, tels que certains recuits d'aciers au carbone.

La production de telles atmosphères est réalisée classiquement par des générateurs installés sur le site d'utilisation de l'atmosphère. Les principaux générateurs existant se répartissent en deux familles.

Une première famille de réacteurs utilise comme matières premières d'une part de l'azote impur contenant 1 à 5% d'oxygène, obtenu par un procédé de perméation, et d'autre part un hydrocarbure. On les fait réagir dans un réacteur à lit catalytique chauffé (la réaction est endothermique), et on obtient une atmosphère hydrogène/CO/azote dont la teneur en azote dépend notamment de la composition du gaz de départ. Ces réacteurs manquent de souplesse de fonctionnement, en ce qu'il est difficile de faire varier rapidement la composition de l'atmosphère produite.

La seconde famille de réacteurs utilise la réaction de l'air avec un hydrocarbure, réalisée à l'intérieur d'un réacteur à lit catalytique chauffé. Le gaz ainsi produit, qui est généralement plus riche en hydrogène et CO que ce que désire l'utilisateur, est ensuite dilué par de l'azote d'origine cryogénique. Idéalement, cet azote cryogénique est produit par une installation de génération d'azote pur située sur le même site que le réacteur à lit catalytique. On peut jouer sur la quantité d'azote de dilution pour faire varier la composition de l'atmosphère produite. Cependant, on ne peut ainsi produire qu'une gamme de compositions d'atmosphères limitée si on utilise l'air comme matière première. Concrètement, on ne peut dépasser des teneurs de 20% de CO et 40% d'hydrogène en sortie du réacteur et avant dilution.

Le but de l'invention est de proposer aux utilisateurs d'atmosphères $H_2/CO/N_2$ un procédé et une installation de production d'une telle atmosphère permettant d'élargir la gamme de compositions possibles de cette atmosphère, et ce dans des conditions économiques plus favorables que les procédés existants.

A cet effet, l'invention a pour objet un procédé de production d'une atmosphère comportant du CO de l'hydrogène et de l'azote, par oxydation d'un hydrocarbure gazeux par un milieu oxygéné dans un réacteur à lit catalytique, caractérisé en ce que ledit milieu oxygéné est un résiduel comportant de l'azote et de l'oxygène, issu du liquide enrichi en oxygène provenant de la cuve d'une colonne de fractionnement pour la production d'azote gazeux, puis vaporisé, ou bien issu d'un résiduel comportant de l'azote et de l'oxygène, issu du résiduaire (perméat) d'un appareil de séparation d'air par voie membranaire.

Ledit résiduel comportant de l'azote et de l'oxygène comporte typiquement de 35 à 40% d'oxygène et de 1,5 à 2% d'argon, le complément étant de l'azote et des impuretés présentes à l'état de trace (typiquement inférieures à quelques ppm).

Ledit milieu oxygéné ne représente selon l'invention en général qu'une fraction dudit résiduel produit par ladite colonne de fractionnement, ladite fraction étant prélevée à l'état non détendu.

Dans le cas d'un résiduel issu d'un séparateur membranaire, avantageusement, ladite atmosphère comportant du CO de l'hydrogène et de l'azote telle qu'issue du réacteur à lit catalytique subit une étape de re-compression, avant d'être envoyée vers une unité de post-traitement d'épuration comportant un système de récupération d'hydrogène par adsorption sélective ( « PSA » dans la littérature pour « Pressure Swing Adsorption »).

Avantageusement, préalablement à l'étape d'adsorption sélective, la dite atmosphère a subi une étape de refroidissement par échange thermique avec de l'eau ainsi qu'une opération d'épuration permettant une condensation de toute ou partie de l'eau qu'elle contient ainsi qu'une filtration de la suie éventuellement générée lors de la réaction catalytique.

Préférentiellement, on réalise un préchauffage dudit résiduel avant son introduction dans le réacteur, et ledit préchauffage est préférentiellement réalisé par échange de chaleur avec l'atmosphère $CO/H_2/N_2$ issue du réacteur.

Préférentiellement, comme décrit plus en détails plus loin dans la présente demande, on réalise une injection « étagée » de l'hydrocarbure gazeux à l'intérieur du réacteur.

L'invention concerne également une installation de production d'une atmosphère comportant du CO de l'hydrogène et de l'azote, par oxydation d'un hydrocarbure gazeux par un milieu oxygéné dans un réacteur à lit catalytique, caractérisée en ce qu'elle comporte :

-   une installation de compression et d'épuration d'air atmosphérique ;
-   une colonne de fractionnement produisant, à partir d'air comprimé et filtré, de l'azote gazeux cryogénique et un résiduel comportant de l'azote et de l'oxygène qui se dépose dans une cuve de la colonne à l'état liquide ;
-   des moyens de vaporisation dudit résiduel, des moyens de prélèvement d'au moins une partie dudit résiduel à l'état gazeux non détendu, et des moyens d'introduction de cette partie prélevée dudit résiduel dans ledit réacteur ;
-   et des moyens d'introduction de l'hydrocarbure gazeux dans ledit réacteur.

Elle comporte aussi préférentiellement des moyens pour diluer le mélange comportant du CO de l'hydrogène et de l'azote produit par ledit réacteur par de l'azote cryogénique produit par ladite colonne de fractionnement.

La présente invention concerne également une installation de production d'une atmosphère comportant du CO de l'hydrogène et de l'azote, par oxydation d'un hydrocarbure gazeux par un milieu oxygéné dans un réacteur à lit catalytique caractérisée en ce qu'elle comporte :

- une installation de compression et d'épuration d'air atmosphérique ;
- un appareil de séparation d'air par voie membranaire produisant un résiduel (perméat) riche en oxygène;
- des moyens d'introduction de tout ou partie de ce résiduel dans ledit réacteur;
- des moyens d'introduction de l'hydrocarbure gazeux dans ledit réacteur ;
- des moyens de re-compression de ladite atmosphère comportant du CO de l'hydrogène et de l'azote telle qu'issue du réacteur à lit catalytique ;
- des moyens permettant de diriger l'atmosphère issue desdits moyens de re-compression vers une unité de post-traitement d'épuration comportant un système de récupération d'hydrogène par adsorption sélective (PSA).

Avantageusement, l'installation comporte, en amont dudit système de récupération d'hydrogène par adsorption sélective (PSA), un système de refroidissement par échange thermique avec de l'eau ainsi qu'un système d'épuration permettant une condensation de toute ou partie de l'eau que l'atmosphère contient ainsi qu'une filtration de la suie éventuellement générée lors de la réaction catalytique.

Préférentiellement, lesdits moyens d'introduction de l'hydrocarbure gazeux dans le réacteur comportent un pluralité de conduites permettant de répartir l'introduction dudit hydrocarbure sur différents niveaux (profondeurs) à l'intérieur dudit réacteur (injection « étagée »).

Préférentiellement, l'installation comporte un échangeur de chaleur permettant de réaliser un préchauffage du résiduel par échanges thermiques avec l'atmosphère produite par le réacteur.

Avantageusement, l'eau récupérée par ladite étape de condensation est recyclée en tout ou partie selon l'une au l'autre des routes suivantes :

- elle est réinjectée dans l'atmosphère obtenue en sortie de réacteur (ce qui permet d'augmenter la teneur en eau dans l'échangeur de chaleur et a pour effet de diminuer l'activité carbone et le phénomène dit de « metal dusting» );
- elle est reinjectée à l'entrée du réacteur (ce qui a pour avantage d'éviter un enrichissement trop important en NH3 dans le condensat).

Préférentiellement, elle comporte des moyens pour réaliser un préchauffage du résiduel $O_2/N_2$ avant son introduction dans le réacteur ou au moment de celle-ci, au moins lors des périodes où ledit réacteur ne fonctionne pas en régime thermique permanent.

Le lit catalytique dudit réacteur peut comprendre également au moins un matériau résistant à la chaleur ayant une meilleure conductivité thermique que le ou les matériaux utilisés comme catalyseur dans ledit lit catalytique.

Ledit matériau résistant à la chaleur ayant une meilleure conductivité thermique que le ou les matériaux utilisés comme catalyseur est, par exemple, choisi parmi le carbure de silicium, le nitrure de bore, le nitrure d'aluminium.

Le ou les matériaux utilisés comme catalyseur et le ou les matériaux résistants à la chaleur ayant une meilleure conductivité thermique qu'eux sont mélangés au sein du lit catalytique, ou encore sont disposés en couches alternées à l'intérieur du réacteur.

Ledit réacteur comporte préférentiellement une paroi externe, une paroi interne qui lui est concentrique, et un matériau isolant thermiquement remplissant l'espace annulaire défini par ladite paroi externe et ladite paroi interne.

La partie supérieure de ladite paroi interne n'est préférentiellement pas reliée à ladite paroi externe.

Comme on l'aura compris, l'invention repose sur le remplacement de l'air (ou de l'azote impur), classiquement utilisé comme comburant dans les générateurs d'atmosphères du type $H_2/CO/N_2$, par un mélange gazeux comportant de l'azote et de l'oxygène tel qu'issu du liquide enrichi en oxygène qui a été prélevé dans la cuve d'une colonne de fractionnement pour la production d'azote gazeux ou encore tel qu'issu du perméat d'un séparateur d'air par voie membranaire.

L'invention sera mieux comprise à la lecture de la description qui suit, donnée en référence aux figures annexées suivantes :

- la figure 1 qui montre schématiquement un type d'installation de production d'un mélange $H_2/CO/N_2$ selon l'art antérieur ;
- la figure 2 qui montre schématiquement une installation de production d'un mélange $H_2/CO/N_2$ conforme à l'invention ;
- la figure 3 qui montre schématiquement, vu en coupe longitudinale, un exemple préféré de générateur d'atmosphère $H_2/CO/N_2$ pouvant être utilisé dans une installation selon l'invention, ainsi que ses annexes.

Un exemple de description d'une installation de production d'azote cryogénique à partir d'air comprimé est décrit dans le document EP-B1-0 343 065. Dans une telle installation, l'air utilisé comme matière première subit une compression, puis est épuré de l'humidité et du $CO_2$ qu'il contient dans une installation d'épuration par adsorption. Après refroidissement dans un échangeur de chaleur à une température proche de son point de liquéfaction, il est introduit dans une colonne de fractionnement. Dans la partie supérieure de cette colonne, on recueille de l'azote gazeux à basse température, que l'on utilise comme fluide refroidissant dans l'échangeur de chaleur précité, avant de le stocker ou de le délivrer directement au client. Dans la partie inférieure de la colonne, on recueille un liquide enrichi en oxygène, contenant typiquement environ 35% à 40% d'oxygène et 1,5 à 2% d'argon, le reste étant de l'azote (et des impuretés inévitables à l'état de traces) pour environ 60 à 65%. Ce liquide peut, comme décrit dans le document EP-B1-0 343 065, être prélevé pour être utilisé comme fluide refroidissant dans un condenseur situé en tête de la colonne de fractionnement. Il en ressort à l'état gazeux. Il est ensuite, avantageusement, utilisé lui aussi comme fluide refroidissant dans l'échangeur de chaleur précité, puis une fois détendu, il peut être au moins en partie utilisé périodiquement pour la régénération des milieux réactionnels de l'installation d'adsorption, avant d'être rejeté à l'extérieur de l'installation. Ce gaz rejeté est traditionnellement appelé dans la littérature « waste » anglais ou « residuel $O_2/N_2$ » et c'est par ce dernier terme qu'on le désignera dans la suite de cette description. Le document EP-B1-0 343 065 enseigne également d'utiliser la partie non rejetée de ce résiduel $O_2/N_2$ à d'autres endroits de la colonne de fractionnement et de ses annexes.

Dans les installations connues de production d'azote cryogénique comportant non pas une mais deux colonnes de fractionnement superposées, un résiduel $O_2/N_2$ semblable est recueilli au pied de la colonne inférieure fonctionnant à moyenne pression, et est introduit dans la colonne supérieure fonctionnant à basse pression.

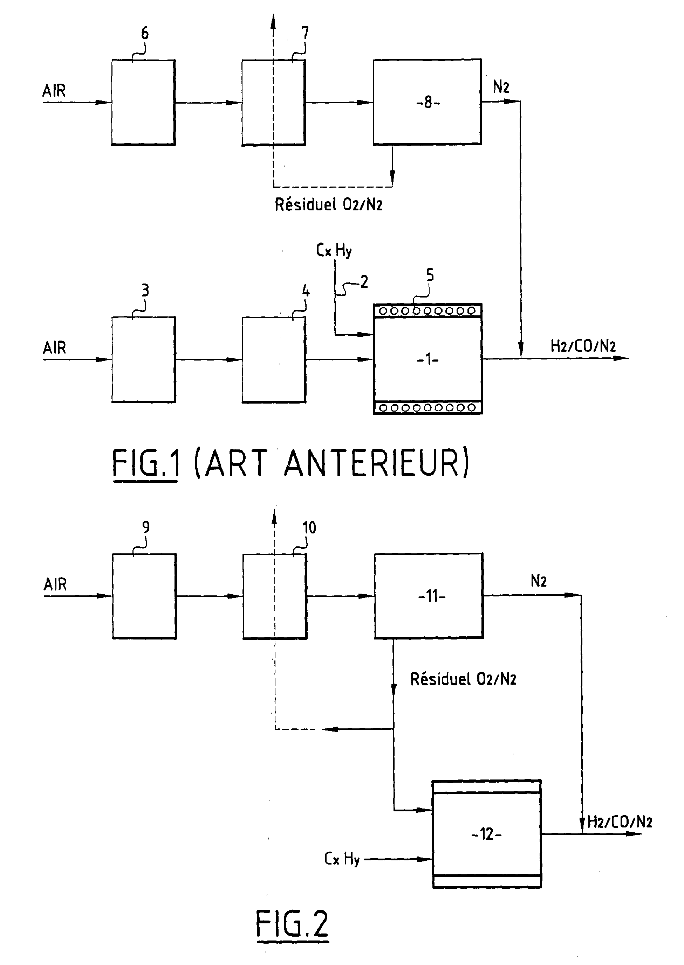

L'installation selon l'art antérieur schématisée sur la figure 1 comporte comme élément essentiel un générateur endothermique comportant un réacteur 1 à lit catalytique à base, par exemple, de métal précieux (platine, palladium...) déposé sur un support de silice ou d'alumine, dans lequel a lieu la réaction chimique d'oxydation d'un hydrocarbure $C_xH_y$ tel que du méthane (ou par exemple du propane, ou du GPL) par un milieu oxygéné tel que l'air. L'hydrocarbure $C_xH_y$ est introduit dans le réacteur 1 par une conduite 2. L'air utilisé comme matière première est d'abord comprimé dans un compresseur 3, puis débarrassé de certains de ses polluants dans une installation de filtration 4, lesdits polluants pouvant constituer des « poisons » pour le catalyseur. A l'intérieur du générateur 1 ont lieu les réactions suivantes (on prend ci-dessous pour exemple non limitatif l'utilisation de méthane comme comburant) :

- l'oxydation partielle du méthane selon

$$CH_4 + 2O_2 + xN_2 \rightarrow CO_2 + 2H_2O + xN_2 \text{ (réaction exothermique)}$$

- puis les réactions endothermiques de reformage :

$$CH_4 + H_2O \rightarrow CO + 3H_2$$

$$CH_4 + CO_2 \rightarrow 2CO + 2H_2$$

Habituellement, il est nécessaire d'équiper le réacteur 1 de moyens de chauffage, tels que des résistances électriques 5 intégrées à la paroi du réacteur 1, ou des brûleurs. Ils ont pour fonction de porter la température du lit catalytique à un niveau suffisant pour que les réactions endothermiques se produisent à une vitesse élevée, afin que les teneurs résiduelles du mélange en $CO_2$ et $H_2O$ soient aussi faibles que possible en sortie du réacteur. Dans la pratique, le gaz endothermique recueilli en sortie du réacteur 1 se compose d'environ 20% de CO, 40% de $H_2$ et 40% de $N_2$.

Parallèlement à cette installation de production d'un mélange $H_2/CO/N_2$, l'installation de la figure 1 comporte une installation de production d'azote cryogénique à partir d'air prélevé dans l'atmosphère. Celle-ci comporte un compresseur 6 et une installation d'épuration par adsorption 7 qui débarrasse l'air comprimé notamment du $CO_2$, de l'eau, et de la majeur partie des polluants qu'il contient (CxHy, Nox, Sox...). L'air ainsi épuré est introduit dans une colonne de fractionnement 8, d'où ressort de l'azote cryogénique. Cet azote cryogénique est ensuite mélangé aux gaz issus du réacteur 1 de manière à réaliser une dilution de ces gaz (trop riches en CO et H2 pour certaines applications). On obtient ainsi une atmosphère adaptée aux besoins de l'utilisateur, telle qu'une atmosphère pour recuit d'aciers au carbone comportant 5% de CO, 10% de $H_2$ et 85% de $N_2$. Au pied de la colonne de fractionnement 8 est recueilli le résiduel $O_2/N_2$ habituel contenant environ 35 à 40% d'oxygène et 60 à 65% d'azote qui, dans le cas représenté, est finalement rejeté à l'air libre après avoir été détendu et avoir éventuellement contribué à la régénération des matériaux de l'installation d'adsorption.

L'installation selon l'invention schématisée sur la figure 2 comporte, comme la précédente, une installation de production d'azote cryogénique à partir d'air prélevé dans l'atmosphère. On y retrouve un compresseur 9, une installation d'épuration par adsorption 10 et une colonne de refroidissement 11 produisant de l'azote cryogénique et un résiduel $O_2/N_2$.

Mais selon l'invention, au moins une fraction de ce résiduel $O_2/N_2$ à l'état gazeux mais non encore détendu est utilisée comme comburant, à la place de l'air, dans le réacteur 12 produisant le mélange $H_2/CO/N_2$ désiré. Par ailleurs, ce réacteur 12 est alimenté en un hydrocarbure $C_xH_y$ tel que le méthane. Le mélange obtenu en sortie du réacteur 12 est dilué le cas échéant par de l'azote cryogénique provenant de la colonne de fractionnement 11, de manière à obtenir la composition désirée par l'utilisateur.

Par rapport à l'art antérieur schématisé sur la figure 1, l'installation selon l'invention et le procédé sur lequel elle se fonde présentent plusieurs avantages.

En premier lieu, il n'est plus nécessaire de disposer que d'un seul ensemble (9, 10) d'appareils de compression et d'épuration de l'air au lieu de deux (3, 4 ; 6, 7).

D'autre part, le résiduel $O_2/N_2$ ayant une teneur en oxygène de l'ordre de 35 à 40%, donc sensiblement supérieure à celle de l'air, on obtient ainsi un mélange gazeux en sortie du réacteur 12 plus riche en CO et en $H_2$ que le mélange obtenu en sortie du réacteur de l'installation selon l'art antérieur. Typiquement, on a pour ces mélanges gazeux les compositions suivantes :

|        | Art antérieur | Invention |
|--------|---------------|-----------|
| $H_2$  | 40%           | 52%       |
| CO     | 20%           | 26%       |
| $N_2$  | 40%           | 22%       |

On a donc accès à une gamme plus importante de compositions d'atmosphères que dans l'art antérieur.

Pour retrouver les atmosphères habituelles en sortie de l'installation, il suffit de jouer sur la quantité d'azote de dilution ajoutée, que l'on extrait de la colonne de fractionnement 11 sans coût supplémentaire.

Ce résiduel $O_2/N_2$ étant de toute façon produit par la colonne de fractionnement 11 également présente dans l'installation selon l'art antérieur (et en général rejeté sans valorisation), il constitue donc une matière première gratuite ne nécessitant pas de traitement particulier (si elle est prélevée à l'état gazeux mais non encore détendu, donc avant son éventuel passage dans l'installation d'adsorption 10). Il faut simplement veiller à ce que, dans les cas où le résiduel $O_2/N_2$ est aussi utilisé à d'autres fins avant d'être rejeté à l'atmosphère, par exemple pour la régénération périodique de l'installation d'adsorption 10, ou recyclé dans la colonne de fractionnement 11, et/ou ses annexes, la quantité prélevée pour alimenter le réacteur endothermique 12 ne soit pas trop importante. Dans le cas contraire, le bon fonctionnement des installations utilisant le résiduel $O_2/N_2$ pourrait en être perturbé. Dans la pratique, on s'aperçoit en fait qu'il suffit de prélever quelques % de ce résiduel $O_2/N_2$ pour obtenir un fonctionnement convenable de l'installation selon l'invention, compte tenu des dimensionnements habituels de ses différents organes. Dans ces conditions, il est toujours possible, par exemple, d'effectuer correctement la régénération périodique de l'installation d'adsorption 10.

Un autre avantage très significatif de l'invention est que l'apport d'oxygène plus important ici que dans le cas de l'utilisation d'air comme comburant augmente la quantité de chaleur dégagée à l'intérieur du réacteur 12 par la réaction exothermique d'oxydation de l'hydrocarbure. Si le réacteur 12 est suffisamment bien isolé thermiquement (ce que l'on peut obtenir par des moyens classiques de calorifugeage), cette quantité de chaleur suffit à constituer l'apport de chaleur nécessaire au bon déroulement des réactions endothermiques de reformage, au moins lorsque le réacteur 12 fonctionne en régime permanent. Il n'est donc plus nécessaire de prévoir autour du réacteur et/ou à l'intérieur du réacteur un dispositif de réchauffage, comme c'était le cas pour le générateur endothermique de l'installation selon l'art antérieur. La quantité de chaleur supplémentaire qu'il peut être nécessaire d'apporter au système lors des phases de démarrage du réacteur 12 peut être apportée grâce à une simple installation de préchauffage des gaz située avant l'entrée du réacteur 12 ou juste à l'entrée de celui-ci. Il faudra simplement veiller à ce que le lit catalytique ne soit pas porté à une température excessive qui le dégraderait.

Par rapport à l'air, le résiduel $O_2/N_2$ utilisé par l'invention présente également l'avantage d'avoir une composition stable, alors que l'air peut contenir, même après sa filtration en 4, des composés qui seraient des polluants pour le lit catalytique et une certaine teneur en vapeur d'eau résiduelle. Typiquement, ce résiduel $O_2/N_2$ présente la composition suivante :

- $O_2$ : 35-40 %
- Ar : 1,5 - 2 % (sa présence n'est pas gênante pour les diverses utilisations des atmosphères produites, et tend même à homogénéiser la température des gaz)

- $CO_2$ < 1 ppm
- $H_2O$ < 1 ppm
- $C_xH_y$ < 1 ppm, sauf $CH_4$ < 10 ppm
- S < 1 ppm
- $N_2$: complément à 100 %

L'absence dans le résiduel $O_2/N_2$ de poisons pour les catalyseurs permet de prolonger sensiblement la durée d'utilisation du lit catalytique du réacteur 12. Cela procure une excellente productivité à l'installation selon l'invention, comparativement à l'installation selon l'art antérieur, puisque le nombre d'arrêts de l'installation pour remplacement du catalyseur est nettement réduit.

La possibilité de se passer d'un dispositif de chauffage du réacteur 12 permet de simplifier considérablement sa construction, par rapport aux générateurs de l'art antérieur qui doivent intégrer un tel dispositif de chauffage 5. De plus, les réacteurs de l'art antérieur doivent avoir une paroi interne métallique de faible épaisseur, de manière à pouvoir réaliser de bons transferts thermiques entre le dispositif de chauffage externe 5 et le lit catalytique. Or cette paroi fine est ainsi soumise à d'intenses sollicitations thermique, et tend à se dégrader rapidement si elle n'est pas réalisée en un acier de haute qualité. Et même dans ces conditions, l'ossature du réacteur 1 doit être généralement remplacée tous les deux ans environ.

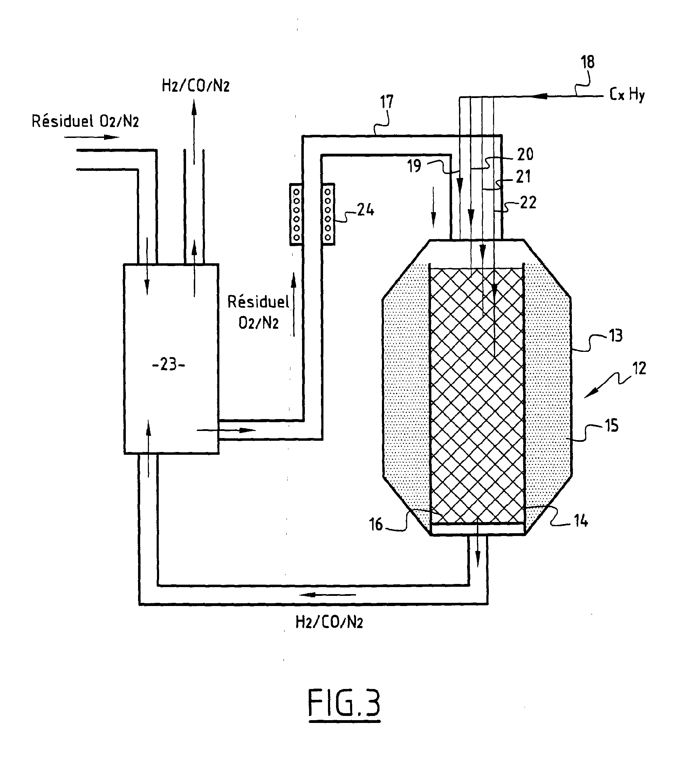

L'invention rend possible l'utilisation d'un réacteur 12 dépourvu de moyens de chauffage, et dont un exemple préféré de sa conception est schématisé sur la figure 3.

Ce réacteur 12 est, de manière classique, disposé selon une orientation générale verticale, et les gaz qui y circulent le traversent de haut en bas pour éviter une fluidisation des matières solides présentes dans le réacteur 12. Il comporte une paroi externe 13 de forme générale cylindrique, par exemple, et une paroi interne 14 concentrique à la paroi externe 13, définissant donc avec elle un espace annulaire rempli par un matériau 15 isolant thermiquement, tel qu'un réfractaire fibreux ou sous forme de billes. La paroi interne 14 est la plus sollicitée thermiquement puisqu'elle est au contact direct du lit catalytique 16 et des gaz chauds qui traversent le réacteur 12. Mais comme elle n'a aucun rôle de transfert thermique entre un organe de chauffage et le lit catalytique 16 (contrairement à la paroi interne du réacteur de l'installation de l'art antérieur), cette paroi interne peut avoir une relativement forte épaisseur, ce qui limite ses risques de dégradation. Une telle dégradation (par fissuration et/ou corrosion) n'aurait d'ailleurs pas de conséquences immédiates trop graves, puisque la paroi externe 13 protégée thermiquement par le matériau isolant 15 continuerait à empêcher les fuites de gaz vers le milieu extérieur. La paroi interne 14 peut donc être réalisée en un matériau moins noble que dans l'art antérieur, ce qui contribue à rendre la construction du réacteur plus économique.

Avantageusement, comme représenté, la paroi interne 14 a son extrémité supérieure laissée libre, sans contact avec la partie supérieure de la paroi externe 13. Cela permet à la paroi interne 14 de se dilater et de se contracter librement lors des cycles thermiques qu'elle subit, et de réagir de façon souple aux variations de pression à l'intérieur du réacteur 12. Cette caractéristique permet donc de prolonger la durée d'utilisation du générateur entre deux réfections complètes.

Le réacteur 12 ainsi construit peut également supporter des pressions de travail élevées, grâce auxquelles le mélange $H_2/CO/N_2$ produit peut être livré au client sous pression, sans qu'une compression ultérieure soit nécessaire.

Dans le réacteur représenté sur la figure 3, le résiduel $O_2/N_2$ est amené à la partie supérieure du réacteur par une conduite 17. Une conduite 18 y amène aussi l'hydrocarbure utilisé comme combustible. On pourrait se contenter d'injecter la totalité de cet hydrocarbure à l'entrée du réacteur 12, donc au même niveau que le résiduel $O_2/N_2$. Mais il est avantageux, comme on l'a représenté sur la figure 3, de réaliser cette injection de manière « étagée », en la répartissant sur, par exemple, quatre niveaux différents en profondeur à l'intérieur du réacteur 12 au moyen de quatre conduites 19, 20, 21, 22, piquées sur la conduite principale 18 et munies de vannes de répartition (non représentées).

En effet, si la totalité de l'hydrocarbure est injectée à un niveau unique, par exemple à l'entrée du réacteur 12, il y a un risque d'une combustion incomplète de l'hydrocarbure qui aboutirait à la formation de suies. Or cette formation de suies serait très dommageable pour les performances du catalyseur dont les pores seraient progressivement bouchés. De manière générale, les suies provoqueraient l'encrassement progressif des conduites, qu'il serait nécessaire de nettoyer périodiquement . La productivité et la fiabilité de l'installation s'en trouveraient donc dégradées. Une injection étagée de l'hydrocarbure permet de limiter le risque de combustion incomplète, donc la formation de suies. On peut ainsi proposer, par exemple, de réaliser l'injection de 10 % de la quantité totale d'hydrocarbure à l'entrée du réacteur 12, et de 30% de cette quantité à chacun des trois autres niveaux d'injection. Ce mode d'injection a en outre l'avantage de prolonger la zone du lit catalytique 16 où se produit un dégagement de chaleur, ce qui est favorable à l'établissement régulier des réactions endothermiques de reformage sur au moins la plus grande partie de la hauteur du lit catalytique 16. Au total, on obtient une température de sortie des gaz plus élevée de quelques dizaines de degrés que dans le cas où on a un point d'injection unique de l'hydrocarbure à l'entrée du réacteur 12. Surtout, on évite les fortes surchauffes du réacteur 12, localisées au voisinage du point d'injection unique de l'hydrocarbure, qui peuvent dégrader rapidement à leur niveau le lit catalytique 16 et le réacteur 12.

Une autre caractéristique que l'on peut avantageusement conférer au réacteur 12 est de remplacer partiellement les billes de silice et/ou d'alumine utilisées le plus habituellement pour former le lit catalytique par des billes d'un matériau (ou de plusieurs matériaux) meilleur conducteur de la chaleur tel que le carbure de silicium ou les nitrures d'aluminium ou de bore. Ces matériaux ont une bonne résistance chimique aux gaz traversant le réacteur 12, au moins dans les zones où il n'y a plus d'oxygène. L'intérêt de mélanger ces réfractaires à relativement bonne conductivité thermique aux billes d'alumine ou de silice mauvaises conductrices est de diminuer le gradient de température entre les parties haute et basse du réacteur 12, et également les gradients thermiques radiaux aux différents niveaux de la paroi 14. En variante, on peut alterner à l'intérieur du réacteur 12 des couches de catalyseur et des couches de matériau meilleur conducteur.

Avantageusement, selon l'invention, le réacteur 12 (ou un réacteur similaire dans son principe de fonctionnement) est inclus dans un circuit tel que représenté sur la figure 3, dans lequel le mélange chaud $H_2/CO/N_2$ produit transite par un échangeur de chaleur 23 où sa température est abaissée à environ 400°C avant qu'il ne soit livré au client. Cet abaissement de température permet de garantir la stabilité de la composition du mélange. D'autre part ce refroidissement s'effectue avantageusement par échange de chaleur avec le résiduel $O_2/N_2$ en provenance de la colonne de fractionnement 11, qui est ainsi porté à environ 700°C avant son injection dans le réacteur 12. De préférence, on installe sur la conduite 17 qui amène le résiduel $O_2/N_2$ de l'échangeur 23 au réacteur 12 un moyen de réchauffage 24. Il permet d'obtenir à coup sûr, au moins en début de cycle lorsque le réacteur 12 ne fonctionne pas encore de manière thermiquement stabilisée, une température suffisante du résiduel à son entrée dans le réacteur 12. Ce moyen 24 peut être remplacé par un brûleur situé à l'entrée du réacteur 12.

Il va de soi que, sans sortir de l'esprit de l'invention, on peut apporter des modifications au procédé et à l'installation tels qu'ils viennent d'être décrits. En particulier, si l'atmosphère $CO/H_2/N_2$ telle qu'elle est produite par le réacteur 12 convient à l'utilisateur, on peut se passer de la dilution par l'azote cryogénique produit par la colonne de fractionnement 11, et employer cet azote à d'autres usages ou le stocker. Inversement, si la quantité d'azote cryogénique produit est insuffisante pour assurer la dilution désirée, on peut compléter cette dilution au moyen d'un apport d'azote extérieur à l'installation.

Si l'invention a été tout particulièrement illustrée dans ce qui précède par le cas du liquide enrichi en oxygène qui a été prélevé dans la cuve d'une colonne de fractionnement pour la production d'azote gazeux, il apparaîtra clairement à l'homme de métier que l'autre mode de réalisation de l'invention selon lequel le milieu oxygéné est issu du résiduel comportant de l'azote et de l'oxygène, issu du résiduaire (perméat) d'un appareil de séparation d'air par voie membranaire est également très performant et avantageux :

- la richesse en oxygène du perméat est réglable par le réglage des paramètres de fonctionnement de l'unité de séparation ;
- il permet (tout comme dans le cas de la colonne de fractionnement) une augmentation significative de la quantité d'hydrogène produit par rapport à l'art antérieur pour atteindre environ 50% (avec une teneur globale en espèces réductrices H2 et CO voisine de 75 à 80%).

## Revendications

1. Procédé de production d'une atmosphère comportant du CO de l'hydrogène et de l'azote par oxydation d'un hydrocarbure gazeux par un milieu oxygéné dans un réacteur à lit catalytique, **caractérisé en ce que** ledit milieu oxygéné est issu de l'une ou l'autre des sources suivantes :

   - d'un résiduel comportant de l'azote et de l'oxygène, issu du liquide enrichi en oxygène provenant de la cuve d'une colonne de fractionnement pour la production d'azote gazeux, puis vaporisé ;
   - d'un résiduel comportant de l'azote et de l'oxygène, issu du résiduaire d'un appareil de séparation d'air par voie membranaire.

2. Procédé selon la revendication 1, **caractérisé en ce que** ledit milieu oxygéné est issu d'un résiduel comportant de l'azote et de l'oxygène, issu du liquide enrichi en oxygène provenant de la cuve d'une colonne de fractionnement pour la production d'azote gazeux, puis vaporisé.

3. Procédé selon la revendication 2, **caractérisé en ce que** ledit résiduel contient de 1,5 à 2% d'argon.

4. Procédé selon la revendication 1, **caractérisé en ce que** ledit milieu oxygéné est issu d'un résiduel comportant de l'azote et de l'oxygène, issu du résiduaire d'un appareil de séparation d'air par voie membranaire.

**5.** Procédé selon la revendication 4, **caractérisé en ce que** ladite atmosphère comportant du CO de l'hydrogène et de l'azote telle qu'issue du réacteur à lit catalytique subit une étape de re-compression, avant d'être envoyée vers une unité de post-traitement d'épuration comportant un système de récupération d'hydrogène par adsorption sélective (PSA).

**6.** Procédé selon la revendication 5, **caractérisé en ce que** préalablement à l'étape d'adsorption sélective, la dite atmosphère a subi une étape de refroidissement par échange thermique avec de l'eau ainsi qu'une opération d'épuration permettant une condensation de toute ou partie de l'eau qu'elle contient ainsi qu'une filtration de la suie éventuellement générée lors de la réaction catalytique.

**7.** Procédé selon la revendication 6 **caractérisé en ce que** l'eau ainsi récupérée est recyclée en tout ou partie selon l'une au l'autre des routes suivantes :

- elle est réinjectée dans l'atmosphère obtenue en sortie de réacteur ;
- elle est reinjectée à l'entrée du réacteur.

**8.** Procédé selon l'une des revendications précédentes, **caractérisé en ce que** ledit résiduel contient de 35 à 40% d'oxygène.

**9.** Procédé selon l'une des revendications 1 ou 2, **caractérisé en ce que** ledit milieu oxygéné ne représente qu'une fraction dudit résiduel produit par ladite colonne de fractionnement, ladite fraction étant prélevée à l'état non détendu.

**10.** Procédé selon l'une des revendications précédente, **caractérisé en ce qu'**on réalise un préchauffage dudit résiduel avant son introduction dans le réacteur, et **en ce que** ledit préchauffage est réalisé par échange de chaleur avec l'atmosphère produite par le réacteur.

**11.** Procédé selon l'une des revendications précédente, **caractérisé en ce qu'**on réalise une injection étagée de l'hydrocarbure gazeux à l'intérieur du réacteur.

**12.** Installation de production d'une atmosphère comportant du CO de l'hydrogène et de l'azote, par oxydation d'un hydrocarbure gazeux par un milieu oxygéné dans un réacteur (12) à lit catalytique (16), **caractérisée en ce qu'**elle comporte :

- une installation (9, 10) de compression et d'épuration d'air atmosphérique ;
- une colonne de fractionnement (11) produisant, à partir d'air comprimé et filtré, de l'azote gazeux cryogénique et un résiduel comportant de l'azote et de l'oxygène qui se dépose dans une cuve de la colonne à l'état liquide ;
- des moyens de vaporisation dudit résiduel, des moyens de prélèvement d'au moins une partie dudit résiduel à l'état gazeux non détendu, et des moyens d'introduction de cette partie prélevée dudit résiduel dans ledit réacteur;
- et des moyens d'introduction de l'hydrocarbure gazeux dans ledit réacteur (12).

**13.** Installation selon la revendication 12, **caractérisée en ce qu'**elle comporte des moyens pour diluer le mélange comportant du CO de l'hydrogène et de l'azote produit par ledit réacteur par de l'azote cryogénique produit par ladite colonne de fractionnement.

**14.** Installation de production d'une atmosphère comportant du CO de l'hydrogène et de l'azote, par oxydation d'un hydrocarbure gazeux par un milieu oxygéné dans un réacteur (12) à lit catalytique (16), **caractérisée en ce qu'**elle comporte :

- une installation (9, 10) de compression et d'épuration d'air atmosphérique ;
- un appareil de séparation d'air par voie membranaire produisant un résiduel (perméat) riche en oxygène;
- des moyens d'introduction de tout ou partie de ce résiduel dans ledit réacteur;
- des moyens d'introduction de l'hydrocarbure gazeux dans ledit réacteur (12) ;
- des moyens de re-compression de ladite atmosphère comportant du CO de l'hydrogène et de l'azote telle qu'issue du réacteur à lit catalytique ;

- des moyens permettant de diriger l'atmosphère issue desdits moyens de re-compression vers une unité de post-traitement d'épuration comportant un système de récupération d'hydrogène par adsorption sélective (PSA).

**15.** Installation selon la revendication 14, **caractérisée en ce qu'**elle comporte, en amont dudit système de récupération d'hydrogène par adsorption sélective (PSA), un système de refroidissement par échange thermique avec de l'eau ainsi qu'un système d'épuration permettant une condensation de toute ou partie de l'eau que l'atmosphère contient ainsi qu'une filtration de la suie éventuellement générée lors de la réaction catalytique.

**16.** Installation selon la revendication 15, **caractérisée en ce qu'**elle comprend des moyens pour recycler l'eau ainsi récupérée en tout ou partie selon l'une au l'autre des routes suivantes :

- pour la réinjecter dans l'atmosphère obtenue en sortie de réacteur ;
- pour la reinjecter à l'entrée du réacteur.

**17.** Installation selon l'une des revendications 12 à 16, **caractérisée en ce que** lesdits moyens d'introduction de l'hydrocarbure gazeux dans le réacteur (12) comportent un pluralité de conduites (19, 20, 21, 22) permettant de répartir l'introduction dudit hydrocarbure sur différents niveaux (profondeurs) à l'intérieur dudit réacteur.

**18.** Installation selon l'une des revendications 12 à 17, **caractérisée en ce qu'**elle comporte un échangeur (23) de chaleur permettant de réaliser un préchauffage du résiduel par échange thermique avec l'atmosphère produite par le réacteur.

**19.** Installation selon l'une des revendications 12 à 18, **caractérisée en ce qu'**elle comporte des moyens (24) pour réaliser un préchauffage du résiduel avant son introduction dans le réacteur (12) ou au moment de celle-ci, au moins lors des périodes où ledit réacteur (12) ne fonctionne pas en régime thermique permanent.

**20.** Installation selon l'une des revendications 12 à 19, **caractérisée en ce que** le lit catalytique (16) dudit réacteur (12) comprend également au moins un matériau résistant à la chaleur ayant une meilleure conductivité thermique que le ou les matériaux utilisés comme catalyseur dans ledit lit catalytique (16).

**21.** Installation selon la revendication 20, **caractérisé en ce que** ledit matériau résistant à la chaleur ayant une meilleure conductivité thermique que le ou les matériaux utilisés comme catalyseur est choisi parmi le carbure de silicium, le nitrure de bore, le nitrure d'aluminium.

**22.** Installation selon la revendication 20 ou 21, **caractérisée en ce que** le ou les matériaux utilisés comme catalyseur et le ou les matériaux résistants à la chaleur ayant une meilleure conductivité thermique qu'eux sont mélangés au sein du lit catalytique (16).

**23.** Installation selon la revendication 20 ou 21, **caractérisée en ce que** le ou les matériaux utilisés comme catalyseur et le ou les matériaux résistants à la chaleur ayant une meilleure conductivité thermique qu'eux sont disposés en couches alternées à l'intérieur du réacteur (12).

**24.** Installation selon l'une des revendications 12 à 23, **caractérisée en ce que** ledit réacteur (12) comporte une paroi externe (13), une paroi interne (14) qui lui est concentrique, et un matériau isolant thermiquement (15) remplissant l'espace annulaire défini par ladite paroi externe (13) et ladite paroi interne (14).

**25.** Installation selon la revendication 24, **caractérisée en ce que** la partie supérieure de ladite paroi interne (14) n'est pas reliée à ladite paroi externe (13).

FIG.1 (ART ANTERIEUR)

FIG.2

H₂/CO/N₂

Résiduel O₂/N₂

18

Cx Hy

17

19    20

21

22

24

Résiduel
O₂/N₂

-23-

13

12

15

16    14

H₂/CO/N₂

FIG.3

**Office européen des brevets**

## RAPPORT DE RECHERCHE EUROPEENNE

Numéro de la demande

EP 01 40 1874

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GB 2 179 056 A (HUMPHREYS & GLASGOW LTD) 25 février 1987 (1987-02-25) * page 1, ligne 19 - ligne 53 * --- | 1 | C01B3/38 |
| A | EP 1 004 561 A (SHELL INT RESEARCH) 31 mai 2000 (2000-05-31) * colonne 3, ligne 42 - colonne 4, ligne 18 * --- | 1 | |
| A | GB 1 598 825 A (BOC LTD) 23 septembre 1981 (1981-09-23) * page 2, ligne 39 - ligne 101 * --- | 1 | |
| A | WO 95 18063 A (SHELL INT RESEARCH ;SHELL CANADA LTD (CA)) 6 juillet 1995 (1995-07-06) * page 6, ligne 28 - page 7, ligne 22 * ----- | 1 | |

**DOMAINES TECHNIQUES RECHERCHES (Int.Cl.7)**

C01B

Le présent rapport a été établi pour toutes les revendications

| Lieu de la recherche | Date d'achèvement de la recherche | Examinateur |
|---|---|---|
| BERLIN | 2 novembre 2001 | Clement, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................
& : membre de la même famille, document correspondant

EPO FORM 1503 03.82 (P04C02)

**EP 1 174 387 A1**

## ANNEXE AU RAPPORT DE RECHERCHE EUROPEENNE
## RELATIF A LA DEMANDE DE BREVET EUROPEEN NO.

EP 01 40 1874

02-11-2001

| Document brevet cité au rapport de recherche | | Date de publication | Membre(s) de la famille de brevet(s) | | Date de publication |
|---|---|---|---|---|---|
| GB 2179056 | A | 25-02-1987 | AUCUN | | |
| EP 1004561 | A | 31-05-2000 | EP | 1004561 A1 | 31-05-2000 |
| GB 1598825 | A | 23-09-1981 | AU | 3411578 A | 20-09-1979 |
| WO 9518063 | A | 06-07-1995 | AU | 1317495 A | 17-07-1995 |
| | | | BR | 9408422 A | 26-08-1997 |
| | | | CA | 2179910 A1 | 06-07-1995 |
| | | | CN | 1139417 A | 01-01-1997 |
| | | | WO | 9518063 A1 | 06-07-1995 |
| | | | EP | 0737164 A1 | 16-10-1996 |
| | | | JP | 9504770 T | 13-05-1997 |
| | | | NO | 962683 A | 16-08-1996 |
| | | | NZ | 277808 A | 24-04-1997 |
| | | | US | 5486313 A | 23-01-1996 |
| | | | ZA | 9410246 A | 02-08-1995 |

EPO FORM P0460